# EUROPEAN PATENT APPLICATION

(11) **EP 3 409 141 A1**
(43) Date of publication of application: **05.12.2018**
(21) Application number: 17173239.9
(22) Date of filing: 29.05.2017
(51) Int. Cl.: A46B 9/04, A61C 17/22, A61C 17/34, A46B 3/10, A46B 7/06

(54) **A TOOTHBRUSH DEVICE**

(71) Applicant: Innotech Appliance Limited, Hong Kong (HK)
(72) Inventor: Wang, Hai, Hong Kong (HK)
(74) Representative: Walker, Ross Thomson

(57) **Abstract**

This invention provides a toothbrush device comprising: a plurality of bristle tuft assemblies, every the bristle tuft assembly comprises a support member and a bristle tuft, the bottom of which is flexibly configured within the support member; a base, a plurality of assembly holes are configured on the base, support members of the plurality of bristle tuft assemblies are flexibly configured in the plurality of assembly holes respectively; a supportive rotating axis, fixedly connecting with an axis hole in the back of the base and driving the base rotate back and forth; a back shell, a housing chamber matching in size with and accommodating the base is configured on the back shell, the supportive rotating axis is rotationally connected with the back shell. The toothbrush device can more effectively and easily clean the teeth, and different bristle tufts can move independently in different directions in accordance with the irregular surface shapes of teeth so that teeth surface and seams can be much more thoroughly and efficiently cleaned.

## Description

### TECHNICAL FIELD

The present application relates to the technical field of products of electric toothbrush, and particularly relates to a toothbrush device in which different bristle tufts can independently move in different directions.

### BACKGROUND OF THE INVENTION

Electric toothbrush has become a daily life necessity in people's daily life. For long, bristle tufts on a brush head are inserted into and fixed within a clip device in a conventional electric toothbrush, thus the position of the bristle tufts are fixed relative to the brush head. Users need to use hands to operate conventional electric toothbrush with different angles including upward, downward, leftward, and rightward so that bristle tufts driven by the clip device are inserted towards teeth surface, therefore because of the random and voluntary hand operation by users, the cleaning of teeth by bristle tufts is confined by the angles and positions operated by users' hands, and corners and seams in the teeth cannot be effectively cleaned.

### TECHNICAL PROBLEM

For the conventional electric toothbrush in the marketplace, the cleaning of teeth by bristle tufts is confined by the angles and positions operated by users' hands, and corners and seams in the teeth cannot be effectively cleaned. There urgently needs a toothbrush in which different bristle tufts can move independently in different directions in accordance with the irregular surface shapes of teeth so that teeth can be much more easily and effectively cleaned.

### SOLUTION TO THE PROBLEM

### Technical solution

The present application provides a toothbrush device, comprising:
a plurality of bristle tuft assemblies, very said bristle tuft assembly comprises a support member and a bristle tuft, the bottom of which is flexibly configured within said support member ;
a base , a plurality of assembly holes are configured on said base , support members of said plurality of bristle tuft assemblies are flexibly configured in said plurality of assembly holes respectively;
a supportive rotating axis, fixedly connecting with an axis hole in the back of said base and driving said base rotate back and forth;
a back shell, a housing chamber matching in size with and accommodating said base is configured on said back shell, said supportive rotating axis is rotationally connected with said back shell.

Advantageously, the toothbrush device further comprises a noise reduction silicon sheet, a plurality of first through holes, the sizes and positions of which match with said plurality of bristle tuft assemblies, are configured on said noise reduction silicon sheet.

Advantageously, the toothbrush device further comprises a front shell , a plurality of second through holes, the sizes and positions of which match with said plurality of bristle tuft assemblies, are configured on said front shell.

Advantageously, a fixation groove is configured in the inner wall of said front shell, said noise reduction silicon sheet fits with and is fixedly connected in said fixation groove.

Advantageously, an fixation cavity for accommodating and fixing bristle tuft is configured in said support member, the size of the opening of said fixation cavity is smaller than the size of the body.

Advantageously, a " 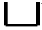 " shaped enclosed fixture is configured at the bottom of said bristle tuft, said enclosed fixture encloses and fixes the bottom of said bristle tuft.

Advantageously, said enclosed fixture-is configured within said fixation cavity , the opening mouth of said fixation cavity is smaller than the top end of said enclosed fixture, keeping said enclosed fixture within said fixation cavity ;

There exists space between said enclosed fixture and the bottom surface and side walls of said fixation cavity.

Advantageously, said support members are configured within the chambers of said pluralities of assembly holes respectively, the size of opening mouth of every said assembly hole is smaller than the size of top end of corresponding support member.

Advantageously, there exists space between every said support member and the bottom and side walls of corresponding assembly hole , thus realizing said support members being flexibly configured within but not separating from said pluralities of assembly holes respectively.

Advantageously, there exists space between said base and inner walls of said housing chamber;
Advantageously, bristle tufts of said plurality of bristle tuft assemblies go through said plurality of first through holes and said plurality of second through holes respectively;
Advantageously, said front shell and said back shell are connected and formed as one body through the concave-convex slots configured on the respectively edges.

### THE BENEFICIAL EFFECT OF THE INVENTION

### Beneficial Effect

The present application provides a toothbrush device that can more effectively and easily clean the teeth, different bristle tufts of the toothbrush can move independently in different directions in accordance with the irregular surface shapes of teeth so that teeth surface and seams can be much more thoroughly and efficiently cleaned.

### BRIEF DESCRIPTION OF THE DRAWINGS

### Description of drawings

In order to more clearly illustrate the embodiments of the present application or the technical solutions in the prior art, the following drawings, which are intended to be used in the description of the embodiments or the prior art, will be briefly described. It will be apparent that the drawings in the following description Is an embodiment of the present invention, it will be apparent to those skilled in the art that other drawings may be obtained in accordance with the provided drawings without paying creative work.
Figure 1 provides a sectional view of the toothbrush device structure, according to an embodiment of the present application.
Figure 2 provides an explosive diagram of the overall structure of the toothbrush device, according to an embodiment of the present application.
Figure 3 provides a structural diagram of a bristle tuft assembly being flexibly configured within an assembly hole, according to an embodiment of the present application.
Figure 4 provides a structural diagram of a bristle tuft being flexibly configured within a support member, according to an embodiment of the present application.

### EMBODIMENT OF THE INVENTION

In order to solve the above technical problems, the overall idea of the embodiment of the present application is as follows:

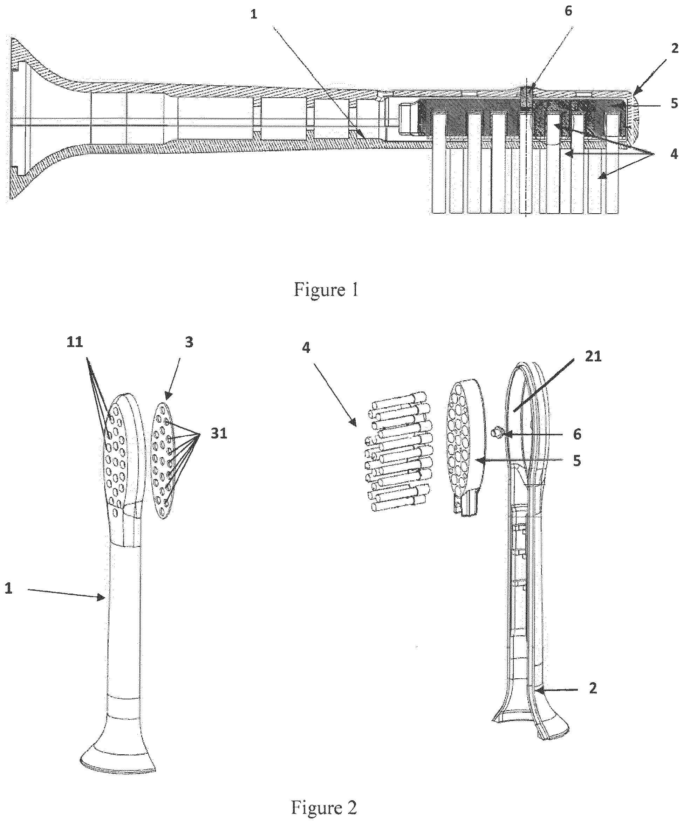

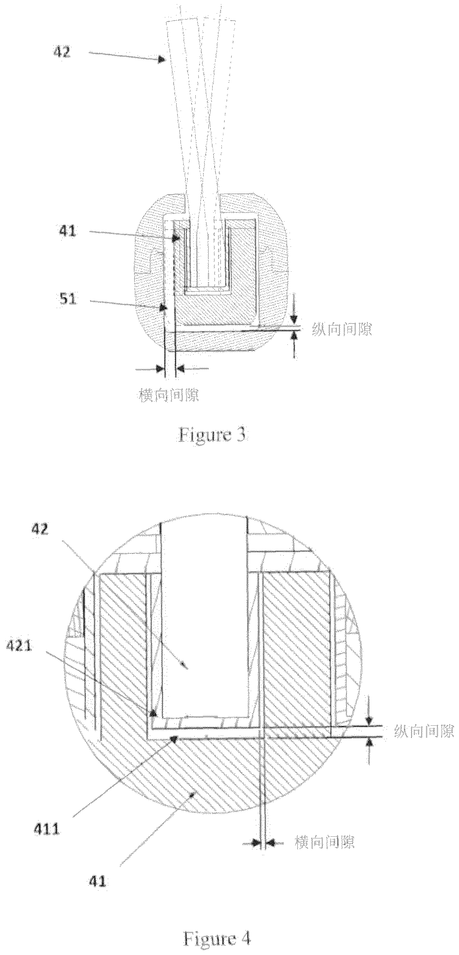

Figure 1 provides a sectional view of the toothbrush device structure, according to an embodiment of the present application. The toothbrush device comprises: a plurality of bristle tuft assemblies, combining figures 2 and 3, every said bristle tuft assembly 4 comprises a support member 41 and a bristle tuft 42, the bottom of which is flexibly configured within said support member 41; a base 5, a plurality of assembly holes 51 are configured on the base 5, support members 41 of the plurality of bristle tuft assemblies 4 are flexibly configured in the plurality of assembly holes respectively; a supportive rotating axis 6, fixedly connecting with an axis hole in the back of the base and driving the base 5 rotate back and forth; a back shell 2, a housing chamber 21 matching in size with and accommodating the base is configured on the back shell 2, the supportive rotating axis is rotationally connected with the back shell. The fixed connection between the supportive rotating axis 6 and the base 5 is achieved through screw thread connection or any other conventional fixed connection methods. A housing slot is configured in the inner surface of the back shell 2, the edge of the supportive rotating axis 6 is configured with a connecting flange, which matches in size with the housing slot, and the connecting flange is configured within the housing slot, realizing the rotational connection between the supportive rotating axis 6 and the back shell 2.

Figure 2 provides an explosive diagram of the overall structure of the toothbrush device, according to an embodiment of the present application. The toothbrush device comprises a noise reduction silicone sheet 3 and a front shell 1, a plurality of first through holes 31, the sizes and positions of which match with the plurality of bristle tuft assemblies 4, are configured on the noise reduction silicon sheet. A plurality of second through holes 11, the sizes and positions of which match with the plurality of bristle tuft assemblies 4, are configured on the front shell 1.

A fixation groove is configured in the inner wall of the front shell 1, and the noise reduction silicone sheet 3 fits with and is fixedly connected in the fixation groove.

There exists space between the base 5 and inner walls of the housing chamber 21. The bottom of the base 5 is driven by a vibration device that is set up in the toothbrush device, at the same time the central position of the base 5 is fixedly connected with the supportive rotating axis 6, so that the base 5 is only able to rotate with the supportive rotating axis 6 as the center of the rotation. The space between the base 5 and inner walls of the housing chamber 21 is adjustable and flexible in accordance with the requirement, depending on the magnitude of the angle and amplitude of rotation. The high-speed rotation back and forth of the base 5 drives the configured bristle tufts 42 swing in a high speed back and forth correspondingly.

Bristle tufts 42 of the plurality of bristle tuft assemblies 4 go through the plurality of first through holes 31 and the plurality of second through holes respectively, and then expose outside, which are used to clean the teeth. When every bristle tuft is driven to rotate in a high speed, the top of the bristle tuft is applied with force from the teeth surface, and at the same time the bristle tuft is applied with resistance force from the edges of the first through hole 31 and the second through hole 11 so that it swings and bends left and right repeatedly in a high speed. The angle of a bristle tuft bending left and right increases with regularity when the position of the bristle tuft moves outward with the supportive rotating axis 6 as the center, in another ward, the magnitude of the rotation increases gradually as the position of the bristle tuft moves from the center of the base 5 towards the edge.

The front shell 1 and the back shell 2 are connected and formed as one body through the concave-convex slots configured on the respective edges, and the noise reduction silicon sheet 3 and the base 5 are positioned within the chamber formed between the front shell 1 and the back shell 2.

Figure 3 provides a structural diagram of a bristle tuft assembly being flexibly configured within an assembly hole, according to an embodiment of the present application. The support members 41 are configured within the chambers of the pluralities of assembly holes 51 respectively, the size of opening mouth of every assembly hole 51 is smaller than the size of top end of corresponding support member 41.

There exists space between every support member 41 and the bottom and side walls of corresponding assembly hole 51, thus realizing the support members 41 being flexibly configured within but not separating from the pluralities of assembly holes 51 respectively, and importantly, the above structure can effectively realize the support member move upward, downward, leftward, and rightward in a random fashion within the chamber of the assembly hole 51, hence achieving the objective that different bristle tufts can move and swing back and forth independently in different directions and angles in accordance with the irregular shape of the teeth surface to more thoroughly and effectively teeth surface and seams.

Figure 4 provides a structural diagram of a bristle tuft being flexibly configured within a support member, according to an embodiment of the present application. A fixation cavity 411 for accommodating and fixing bristle tuft is configured in the support member 41, and the size of the opening of the fixation cavity 411 is smaller than the size of the body.

A " 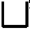 " shaped enclosed fixture 421 is configured at the bottom the bristle tuft 42, and the enclosed fixture 421 encloses and fixes the bottom of the bristle tuft 42. The enclosed fixture 421 can be made of plastic or metal sheet.

The enclosed fixture 421 is configured within the fixation cavity 411, and the opening mouth of the fixation cavity 411 is smaller than the top end of the enclosed fixture 421, keeping the enclosed fixture 421 within the fixation cavity 411. There exists space between the enclosed fixture 421 and the bottom surface and side walls of the fixation cavity 411, and thus the enclosed fixture 421 is able to move upward and downward within the fixation cavity 411, driving the bristle tuft 42 move in the same direction correspondingly.

The distinguishing structural feature of this toothbrush device is that there is longitudinal and horizontal space in the fixation cavity 411 housing the bottom of the bristle tuft 42 and the assembly 51 housing the support member 41 respectively, which as a result provide sufficient room and magnitude for the bristle tuft to move upward, downward, leftward, and rightward as well as swing back and forth, moreover, different bristle tufts 42 independently move and swing, which enables a bristle tuft to insert a specific angle and force upon a tooth corresponding to the surface shape of that tooth, significantly improving the cleaning effect on the teeth and the experience of teeth brushing.

While the preferred embodiments of the present application have been described, it will be apparent to those skilled in the art that other changes and modifications may be made to these embodiments once the basic inventive concepts are known. Accordingly, the appended claims are intended to be construed as including preferred embodiments and all changes and modifications that fall within the scope of the invention.

It will be apparent to those skilled in the art that various changes and modifications can be made therein without departing from the spirit and scope of the application so that if such modifications and variations of the invention are within the scope of the appended claims and the equivalents thereof. The present application is also intended to embrace such variations.

## Claims

1. A toothbrush device, comprising:
a plurality of bristle tuft assemblies (4), every said bristle tuft assembly (4) comprises a support member (41) and a bristle tuft (42), the bottom of which is flexibly configured within said support member (41);
a base (5), a plurality of assembly holes (51) are configured on said base (5), support members (41) of said plurality of bristle tuft assemblies (4) are flexibly configured in said plurality of assembly holes (51) respectively;
a supportive rotating axis (6), fixedly connecting with an axis hole in the back of said base (5) and driving said base (5) rotate back and forth;
a back shell (2), a housing chamber (21) matching in size with and accommodating said base (5) is configured on said back shell (2), said supportive rotating axis (6) is rotationally connected with said back shell (2).

2. The toothbrush device according to claim 1, wherein, further comprises a noise reduction silicon sheet (3), a plurality of first through holes (31), the sizes and positions of which match with said plurality of bristle tuft assemblies (4), are configured on said noise reduction silicon sheet (3).

3. The toothbrush device according to claim 2, wherein, further comprises a front shell (1), a plurality of second through holes (11), the sizes and positions of which match with said plurality of bristle tuft assemblies (4), are configured on said front shell (1).

4. The toothbrush device according to claim 3, wherein, a fixation groove is configured in the inner wall of said front shell (1), said noise reduction silicon sheet (3) fits with and is fixedly connected in said fixation groove.

5. The toothbrush device according to claim 1, wherein, an fixation cavity (411) for accommodating and fixing bristle tuft is configured in said support member (41), the size of the opening of said fixation cavity (411) is smaller than the size of the body.

6. The toothbrush device according to claim 5, wherein, a " 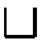 " shaped enclosed fixture (421) is configured at the bottom of said bristle tuft (42), said enclosed fixture (421) encloses and fixes the bottom of said bristle tuft (42).

7. The toothbrush device according to claim 6, wherein, said enclosed fixture (421) is configured within said fixation cavity (411), the opening mouth of said fixation cavity (411) is smaller than the top end of said enclosed fixture (421), keeping said enclosed fixture (421) within said fixation cavity (411);
there exists space between said enclosed fixture (421) and the bottom surface and side walls of said fixation cavity (411).

8. The toothbrush device according to claim 1, wherein, said support members (41) are configured within the chambers of said pluralities of assembly holes (51) respectively, the size of opening mouth of every said assembly hole (51) is smaller than the size of top end of corresponding support member (41).

9. The toothbrush device according to claim 8, wherein, there exists space between every said support member (41) and the bottom and side walls of corresponding assembly hole (51), thus realizing said support members (41) being flexibly configured within but not separating from said pluralities of assembly holes (51) respectively.

10. The toothbrush device according to claim 4, wherein, there exists space between said base (5) and inner walls of said housing chamber (21);
bristle tufts (42) of said plurality of bristle tuft assemblies (4) go through said plurality of first through holes (31) and said plurality of second through holes (11) respectively;
said front shell (1) and said back shell (2) are connected and formed as one body through the concave-convex slots configured on the respectively edges.
